# EUROPÄISCHE PATENTSCHRIFT

(11) **EP 2 115 847 B1**
(45) Veröffentlichungstag und Bekanntmachung des Hinweises auf die Patenterteilung: **20.02.2013**
(21) Anmeldenummer: 07857552.9
(22) Anmeldetag: 13.12.2007
(51) Int. Cl.: H02H 11/00

(54) **KRAFTFAHRZEUG-STEUERGERÄT MIT VERPOLSCHUTZ**
MOTOR VEHICLE CONTROLLER WITH POLARITY-REVERSAL PROTECTION
MODULE DE COMMANDE POUR VÉHICULE AUTOMOBILE AVEC PROTECTION CONTRE LES INVERSIONS DE POLARITÉ

(30) Priorität: 04.01.2007 DE 102007001624
(43) Veröffentlichungstag der Anmeldung: 11.11.2009
(73) Patentinhaber: Continental Teves AG & Co. OHG, 60488 Frankfurt (DE); Conti Temic Microelectronic GmbH, 90411 Nürnberg (DE); Continental Automotive Corporation, Kanagawa 221-0031 (JP)
(72) Erfinder: GOECKE, Matthias, 248-0013 Kamakura-Shi (JP); RIEGEL, Norbert, Kanagawa 224-0037 (JP); SCHNEIDER, Gerhard, 65843 Sulzbach (DE); SINGH, Vibhor, Kanagawa 230-0051 (JP)
(74) Vertreter: Brand, Markus
(86) Internationale Anmeldenummer: PCT/EP2007/063905
(87) Internationale Veröffentlichungsnummer: WO 2008/080793

(56) Entgegenhaltungen:
- EP-A- 1 429 439
- DE-A1- 19 603 117
- DE-A1- 19 715 024
- DE-A1- 19 803 040
- DE-A1- 19 841 443
- DE-A1- 19 928 760
- US-A1- 2006 227 475
- DAVIS D: "OVERLOAD AND REVERSE-CURRENT CIRCUITRY PROTECTS BATTERY AND LOAD" EDN ELECTRICAL DESIGN NEWS, REED BUSINESS INFORMATION, HIGHLANDS RANCH, CO, US, Bd. 41, Nr. 5, 1. März 1996 (1996-03-01), Seiten 165-168,170,17, XP000584147 ISSN: 0012-7515

## Beschreibung

Die Erfindung betrifft ein Steuergerät, insbesondere in einem Kraftfahrzeug-Bordnetz, umfassend eine oder mehrere erste High-Side-angesteuerte Lasten, welche durch eine Lastansteuerung getrieben wird/werden, sowie insbesondere mindestens eine weitere High-Side-angesteuerte Last, wobei die Lastansteuerung und die Lasten über mindestens zwei High-Side-Pfade und über einen oder mehrere mit einem Bezugspotential verbundenen Low-Side-Pfad spannungsversorgt werden.

Das Dokument DE 198 03 040 A1 offenbart eine Leistungsschaltung mit Batterie-Verpolungsschutz-, Strommess- und Temperaturmessschaltungen, wobei diese Messschaltungen digitale Ausgangssignale liefern.

In derartigen Kraftfahrzeug-Bordnetzen kommen gerade im Hinblick auf die Vielzahl möglicher Lasten oder Verbraucher vielfältige Steuergeräte, beispielsweise als ESP- oder ABS-Steuergeräte oder auch für Fahrwerke, Powertrain oder Antriebsstrang oder auch für Komfort-Komponenten zum Einsatz. Derartige Steuergeräte müssen in der Regel vor Beschädigungen aufgrund von Verpolen, beispielsweise bei einer Verpolung nur des Steuergerätes durch Werkstattfehler oder auch bei einer Verpolung des gesamten Bordnetzes durch Verpolen des Batterieanschlusses, geschützt werden. Dazu ist in modernen Kraftfahrzeug-Bordnetzen üblicherweise ein Verpolschutz für die Steuergeräte vorgesehen.

Schaltungen für einen Verpolschutz in elektronischen Geräten sind vielfach bekannt geworden. Im Bereich der Kraftfahrzeug-Steuergeräte sind zur Realisierung eines Verpolschutzes üblicherweise im High-Side-Pfad der Spannungsversorgung, welcher sich auf einem positiven Potenzial befindet, Halbleiterdioden eingesetzt, die einen Stromfluss in die nicht zur Spannungsversorgung geeignete Richtung verhindern. Diese Dioden sind häufig kostenintensive Schottky-Dioden.

In zumindest zum Teil mit diskreten Bauelementen bestückten Schaltungen spielt die Auslegung und Anordnung der Halblei-terdioden jedoch gerade bei Massenprodukten im Hinblick auf die Kosten eine möglicherweise erhebliche Rolle. Es hat sich gezeigt, dass auch in bereits nach derartigen Kriterien sorgsam aufgebauten Schaltungen noch Raum für Einsparungen besteht.

Die Aufgabe der vorliegenden Erfindung besteht nun darin, in einem Kraftfahrzeug-Bordnetz der oben genannten Art, insbesondere mit High-Side-Treibern, einen zuverlässigen und eine hohe betriebliche Sicherheit gewährleistenden elektronischen Verpolschutz für ein Steuergerät bereitzustellen, welcher gegenüber bestehenden Schaltungen zum Verpolschutz kostengünstiger ist.

Diese Aufgabe wird erfindungsgemäß dadurch gelöst, dass als Verpolschutz mindestens ein aktives Halbleiter-Bauelement in einen Low-Side-Pfad geschaltet ist. Die erfindungsgemäße Lösung besteht somit insbesondere in einer neuen Schaltungsanordnung mit Low-Side-Verpolschutz, welche Bestandteil eines Kraftfahrzeug-Steuergeräts ist. Die neue Schaltungsanordnung umfasst eine oder mehrere erste High-Side-angesteuerte Lasten, wie z. B. Ventilspulen, welche durch eine Lastansteuerung (z. B. eine Anzahl von Halbleitertreibern) getrieben wird/werden, sowie insbesondere mindestens eine weitere High-Side-angesteuerte Last (z. B. ein Pumpenmotor), wobei die Lastansteuerung und die Lasten über mindestens zwei High-Side-Pfade und über einen mit einem Bezugspotential verbundenen gemeinsamen Low-Side-Pfad spannungsversorgt werden. Eine Besonderheit der Schaltung besteht unter anderem darin, dass im Low-Side-Pfad als Verpolschutz ein aktives Halbleiter-Bauelement in den Low-Side-Pfad, also in den Massenpfad des Bordnetzes, geschaltet ist. Auf diese Weise ist es möglich, einen sicheren und zuverlässigen Verpolschutz auch ohne aufwändige Bauteile wie Dioden oder dergleichen im High-Side-Pfad der Lasten bereitzustellen.

Die vorstehend beschriebene Schaltungsanordnung hat unter anderem den Vorteil, dass die Kosten der diskreten Bauelemente, wenn auch bei Betrachtung einer einzigen Schaltung, besonders gering gehalten werden können. Da die beschriebene Schaltungsanordnung besonders bevorzugt in Steuergeräten in Kraftfahrzeug-Bordnetzen zum Einsatz kommt, die in sehr hohen Stückzahlen gefertigt werden, ergeben sich dennoch erhebliche Kostenvorteile. Ein weiterer Vorteil ist, dass die Schaltung weniger Wärmeverluste gegenüber einem Verpolschutz mit Dioden aufweist.

Vorzugsweise ist als Verpolschutz ein n-Kanal-Feldeffekt-transistor als aktives Halbleiter-Bauelement in den Massepfad geschaltet.

Eine besonders effiziente Bauweise ist dabei erreichbar, indem das als Verpolschutz in den Low-Side- oder Massepfad des Steuergerätes geschaltete aktive Halbleiter-Bauelement derart angeordnet ist, dass mit diesem Bauelement ein wirksamer Verpolschutz für eine Mehrzahl aktiver Komponenten oder Lasten erreichbar ist. Dazu ist das aktive Halbleiter-Bauelement in besonders vorteilhafter Ausgestaltung in einen mehreren Lasten gemeinsamen Low-Side- oder Massepfad geschaltet. Dadurch kann das als Verpolschutz vorgesehene Halbleiter-Bauelement eine Mehrzahl von zur Absicherung der Lasten ansonsten notwendigen Komponenten, insbesondere Dioden, ersetzen.

Vorzugsweise ist in der vorstehend beschriebenen Schaltungsanordnung mindestens eine weitere Last (beispielsweise der bereits erwähnte Pumpenmotor) vorgesehen, welche eine oder jeweils eine Freilaufdiode umfasst, über die der ggf. vorhandene Freilaufstrom der mindestens einen weiteren Last fließen kann und in deren Massepfad als Verpolschutz das aktive Halbleiter-Bauelement geschaltet ist. Im Freilaufpfad der weiteren Last ist damit kein aktives Halbleiter-Bauelement mehr notwendig, wodurch die Schaltungsanordnung nochmals kostengünstiger hergestellt werden kann. Insbesondere ist daher auch die Freilaufdiode an der weiteren Last vorzugsweise keine Schottky-Diode.

Bevorzugt erfolgt die die High-Side-Ansteuerung der weiteren Last durch ein aktives Bauelement. Hierdurch kann beispielsweise mittels einer PWM-Ansteuerung die Drehzahl der Motors geregelt werden.

Vorzugsweise ist zwischen Gate- und Source-Anschluss des aktiven Bauelements ein Kondensator geschaltet. Dieser bietet einen Schutz des vergleichsweise empfindlichen Halbleiters gegenüber ESD-Spannungsimpulsen oder negativen transienten Pulsen.

Die Gateansteuerung des aktiven Bauelements, das den Verpolschutz bereitstellt, erfolgt bevorzugt über ein positives geschaltetes Potential, wobei das Gate dieses Bauelements hierzu insbesondere mit einem High-Side-Pfad Schaltung leitend verbunden ist.

Die Erfindung betrifft außerdem die Verwendung der genannten Schaltungsanordnung in einem Steuergerät eines elektronisch gesteuerten Bremssystems, insbesondere ESP oder ABS, oder eines passiven Kraftfahrzeugsicherheitssystems.

Bevorzugt handelt es sich bei den einen oder mehreren ersten Lasten um induktive Lasten, insbesondere Ventilspulen für eine hydraulische oder pneumatische Ansteuerung.

Bei der mindestens zweiten Last handelt es sich vorzugsweise um einen Motor, insbesondere einen Pumpenmotor eines hydraulischen oder pneumatischen Aggregats.

Die mit der Erfindung erzielten Vorteile bestehen insbesondere darin, dass durch die Einschaltung eines aktiven Halbleiter-Bauelements als Verpolschutz für die Steuergeräte in den Low-Side- oder Massepfad des Kraftfahrzeugs ein wirksamer und betriebssicherer Verpolschutz auf besonders einfache Weise und mit besonders einfachen Mitteln erreichbar ist. Insbesondere bei mehreren abzusichernden Steuergeräten oder Lasten können eine Vielzahl von die einzelnen spannungsführenden oder High-Side-Kanäle geschalteten Komponenten wie Dioden und dergleichen entfallen. Auf diese Weise kann insbesondere das Steuergerät eines ESP mit Freilaufpfad besonders günstig abgesichert werden, wobei die ansonsten vorgesehene Verpolschutzdiode im so genannten K130_V-Pfad ebenso entfallen kann wie der Feldeffekt-Transistor im Freilaufpfad, wobei zudem noch die dort ansonsten vorzusehende Schottky-Diode durch eine vergleichsweise kostengünstige SMC-Diode ersetzt werden kann.

Bei einem ABS- oder ESP-System mit digitaler oder analoger Ventilansteuerung ohne Freilaufpfad kann der genannte Verpolschutz die ansonsten im so genannten K130_V-Pfad vorgesehene Verpolschutzdiode ersetzen. Auf die gleiche Weise kann auch eine vergleichsweise robuste Pumpenansteuerung mit vergleichsweise schneller Taktung der Pumpe realisiert werden, wobei ein günstiger Freilaufpfad über eine geeignete, vergleichsweise klein gehaltene Diode hergestellt werden kann.

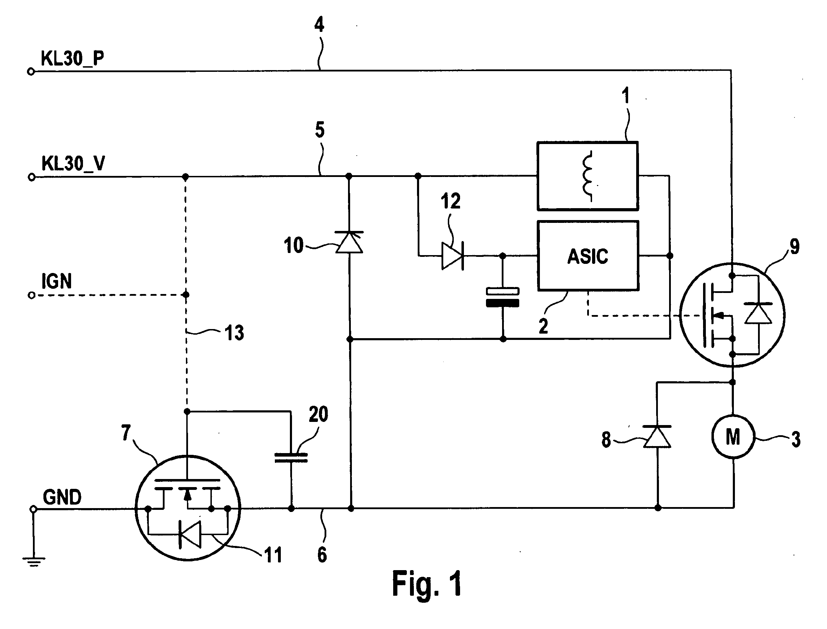

Weitere bevorzugte Ausführungsformen ergeben sich aus den Unteransprüchen und der nachfolgenden Beschreibung eines Ausführungsbeispiels. Darin zeigt die Figur schematisch eine Verpolschutzschaltung in einem elektronischen Bremsensteuergerät in einem Kraftfahrzeug-Bordnetz.

Das Steuergerät gemäß der Figur ist in einem Kraftfahrzeug-Bordnetz eingesetzt und weist einen High-Side-Pfad auf, der über eine Leitung 4 mit einem positiven Potenzial (z. B. Pluspol der Fahrzeugbatterie) leitend verbunden ist. Das gleiche gilt für die Leitung 5, die zur Bildung eines weiteren High-Side-Pfades, auch als K130_V-Pfad bezeichnet, ebenfalls mit einem positiven Potential verbunden ist. Auf der Leitung IGN befindet sich ebenfalls ein positives Potenzial, wobei dieses in einem Kraftfahrzeug über die Betätigung der Zündung schaltbar ist.

Die Leitung 5 und damit der High-Side-Pfad führt zu ersten Lasten 1 (z. B. mehrere Ventilspulen), welche durch Halbleiter-Treiber einschließlich der Ansteuerlogik in einem anwenderspezifischen Schaltkreis (ASIC) 2 zusammengefasst sind. Weiterhin führt die Leitung 5 über eine Diode 12 an den Eingang für die Spannungsversorgung des Schaltkreises 2. Die Masseanschlüsse der Lasten 1 und des Schaltkreises 2 sind zusammengeführt und mit einer Masseleitung 6 verbunden, welche eine Verbindung zu einem Bezugspotenzial (Masse) schafft. Die mit dem positiven Potenzial verbundene Leitung 4 führt hingegen zu einem High-Side-Treiber 9, dessen Gate vom Schaltkreis 2 angesteuert wird. Der Treiber 9 steuert eine weitere Last 3, nämlich im Ausführungsbeispiel den Pumpenmotor eines Drucksteueraggregats, an. Auch die weitere Last 3 ist mit der Masseleitung 6 verbunden.

Das durch die Schaltungsanordnung repräsentierte Steuergerät weist einen besonders einfach gehaltenen und demnach besonders betriebssicheren Verpolschutz auf, über den die Steuergeräte wirksam vor Verpolen durch Werkstattfehler oder Falschanschluss der Batterie geschützt sind. Als gemeinsamer Verpolschutz für die genannten Lasten 1, 3 ist dabei in die Masseleitung 6 und somit in den Low-Side- oder Massepfad des Bordnetzes ein aktives Halbleiter-Bauelement 7, im Ausführungsbeispiel ein n-Kanal-FET, geschaltet.

Wird durch Verpolung an Klemme GND gegenüber Leitung 4 oder 5 ein positives Potenzial angelegt, wirkt dafür über die Leitung 13 ein negatives Potential auf das Gate das Halbleiter-Bauelement 7 ein, welches in diesem Fall sperrt. Im Normalbetrieb (keine Verpolung) ist das Potential auf der Leitung 13 hingegen positiv, und der Halbleiterschalter 7 ist durchgeschaltet.

Der Halbleiterschalter 7 umfasst eine intrinsische Diode 11, über die vorteilhafterweise bei Ausfall der Gate-Ansteuerung ein Strom fließen kann, so dass die Schaltung betriebsfähig bleibt. Die Diode 10 stellt eine leitende Verbindung zwischen einem Gate von Halbleiter 7 (der Last 3 zugeordnet) und dem High-Side-Pfad 5 her.

Zur Absicherung gegen negative transiente Pulse ist zwischen Gate- und Service-Anschluss des Halbleiter-Bauelements 7 ein Kondensator 20 geschaltet.

### Bezugszeichenliste

- 1: Last
- 2: Lastansteuerung/Schaltkreis
- 3: Last
- 4, 5: High-Side-Pfade
- 6: Low-Side-Pfad
- 7: Halbleiter-Bauelement
- 8: Freilaufdiode
- 9: aktives Bauelement
- 10: Diode
- 11: intrinsische Diode
- 12: Diode
- 13: Leitung
- 20: Kondensator

## Patentansprüche

1. Kraftfahrzeug-Steuergerät, umfassend eine oder mehrere erste High-Side-angesteuerte Lasten (1), welche durch eine Lastansteuerung (2) getrieben wird/werden, sowie mindestens eine weitere High-Side-angesteuerte Last (3), wobei die Lastansteuerung und die Lasten über mindestens zwei High-Side-Pfade (4, 5) und über einen oder mehrere mit einem Bezugspotential verbundenen Low-Side-Pfad (6) spannungsversorgt werden, **dadurch gekennzeichnet, dass** als Verpolschutz mindestens ein aktives Halbleiter-Bauelement (7) in einen Low-Side-Pfad (6) geschaltet ist, und die Gateansteuerung des aktiven Bauelements (7) über ein positives geschaltetes Potential erfolgt, wobei das Gate dieses Bauelements hierzu mit dem nicht die weitere High-Side-angesteuerte Last versorgenden High-Side-Pfad (5) leitend verbunden ist.

2. Kraftfahrzeug-Steuergerät nach Anspruch 1, **dadurch gekennzeichnet, dass** das aktive Halbleiter-Bauelement (7) in einen einer Mehrzahl von Lasten (1, 3) zugeordneten Low-Side-Pfad (6) geschaltet ist.

3. Kraftfahrzeug-Steuergerät nach Anspruch 1 oder 2, 1. **dadurch gekennzeichnet, dass** als aktives Halbleiter-Bauelement (7) ein n-Kanal-Feldeffekttransistor vorgesehen ist.

4. Kraftfahrzeug-Steuergerät nach einem der Ansprüche 1 bis 3, **dadurch gekennzeichnet, dass** die weitere High-Side-angesteuerte Last (3) eine Freilaufdiode (8) umfasst, über die der ggf. vorhandene Freilaufstrom der mindestens einen weiteren Last (3) fließt.

5. Kraftfahrzeug-Steuergerät nach Anspruch 4,**dadurch gekennzeichnet, dass** die Freilaufdiode an der weiteren Last (3) keine Schottky-Diode ist.

6. Kraftfahrzeug-Steuergerät nach einem der Ansprüche 1 bis 5, **dadurch gekennzeichnet, dass** die High-Side-Ansteuerung der weiteren Last (3) durch ein aktives Bauelement (9) erfolgt.

7. Kraftfahrzeug-Steuergerät nach einem der Ansprüche 1 bis 6, **dadurch gekennzeichnet, dass** zwischen Gate- und Source-Anschluss des aktiven Bauelements (7) ein Kondensator (20) geschaltet ist.

## Claims

1. Motor vehicle control device comprising one or more first high-side-actuated loads (1) which is/are driven by a load actuation means (2) and at least one further high-side-actuated load (3), wherein the load actuation means and the loads are supplied with voltage via at least two high-side paths (4, 5) and via one or more low-side paths (6) connected to a reference potential, **characterized in that** at least one active semiconductor component (7) is connected as a polarity reversal protection into a low-side path (6), and the gate actuation of the active component (7) is carried out by means of a positive, connected potential, wherein for this purpose the gate of this component is conductively connected to the high-side path (5), which does not supply the further high-side-actuated load.

2. Motor vehicle control device according to Claim 1, **characterized in that** the active semiconductor component (7) is connected into a low-side path (6) which is assigned to a plurality of loads (1, 3).

3. Motor vehicle control device according to Claim 1 or 2, **characterized in that** an n-type channel field-effect transistor is provided as an active semiconductor component (7).

4. Motor vehicle control device according to one of Claims 1 to 3, **characterized in that** the further high-side-actuated load (3) comprises a free-wheeling diode (8) via which the possibly present free-wheeling current of the at least one further load (3) flows.

5. Motor vehicle control device according to Claim 4, **characterized in that** the free-wheeling diode at the further load (3) is not a Schottky diode.

6. Motor vehicle control device according to one of Claims 1 to 5, **characterized in that** the high-side actuation of the further load (3) is carried out by means of an active component (9).

7. Motor vehicle control device according to one of Claims 1 to 6, **characterized in that** a capacitor (20) is connected between the gate terminal and the source terminal of the active component (7).

## Revendications

1. Appareil de commande pour véhicule automobile, l'appareil comprenant un ou plusieurs premières charges (1) commandées par le haut et pilotées par une commande de charge (2) ainsi qu'au moins une autre charge (3) commandée par le haut, la commande de charge et les charges étant alimentées en tension par l'intermédiaire d'au moins deux parcours hauts (4, 5) et par l'intermédiaire d'un ou plusieurs parcours bas (6) reliés à un potentiel de référence,
**caractérisé en ce que**
un composant semi-conducteur actif (7) qui sert de protection contre l'inversion de polarité est raccordé dans un parcours bas (6),
**en ce que** la commande de grille du composant actif (7) s'effectue par l'intermédiaire de l'application d'un potentiel positif et
**en ce que** dans ce but, la grille de ce composant est reliée de manière conductrice au parcours haut (5) qui n'alimente pas l'autre charge commandée par le haut.

2. Appareil de commande pour véhicule automobile selon la revendication 1, **caractérisé en ce que** le composant semi-conducteur actif (7) est raccordé dans un parcours bas (6) associé à plusieurs charges (1, 3).

3. Appareil de commande pour véhicule automobile selon les revendications 1 ou 2, **caractérisé en ce qu'**un transistor à effet de champ et canal n est prévu comme composant semi-conducteur actif (7).

4. Appareil de commande pour véhicule automobile selon l'une des revendications 1 à 3, **caractérisé en ce que** l'autre charge (3) commandée par le haut comporte une diode (8) de marche à vide dans laquelle s'écoule le courant de marche à vide éventuellement présent de la ou des autres charges (3).

5. Appareil de commande pour véhicule automobile selon la revendication 4, **caractérisé en ce que** la diode de marche à vide prévue sur l'autre charge (3) n'est pas une diode Schottky.

6. Appareil de commande pour véhicule automobile selon l'une des revendications 1 à 5, **caractérisé en ce que** la commande par le haut de l'autre charge (3) s'effectue par l'intermédiaire d'un composant actif (9).

7. Appareil de commande pour véhicule automobile selon l'une des revendications 1 à 6, **caractérisé en ce qu'**un condensateur (20) est raccordé entre la borne de grille et la borne de source du composant actif (7).
